# EUROPEAN PATENT SPECIFICATION

(11) **EP 2 763 750 B1**
(45) Date of publication and mention of the grant of the patent: **01.12.2021**
(21) Application number: 11770979.0
(22) Date of filing: 06.10.2011
(51) Int. Cl.: A62C 5/00, B60R 21/264, F42B 3/04, B60R 21/26

(54) **GAS GENERATOR AND METHOD OF GAS GENERATION**
GASGENERATOR UND GASERZEUGUNGSVERFAHREN
GÉNÉRATEUR DE GAZ ET PROCÉDÉ DE PRODUCTION DE GAZ

(43) Date of publication of application: 13.08.2014
(73) Proprietor: Northrop Grumman Innovation Systems, Inc., Plymouth, MN 55442 (US)
(72) Inventor: SAMPSON, William P., North Ogden, Utah 84414 (US)
(74) Representative: Lang, Johannes
(86) International application number: PCT/US2011/055081
(87) International publication number: WO 2013/052052

(56) References cited:
- EP-A1- 1 767 248
- US-A1- 2005 115 721
- US-A1- 2010 170 684
- US-A1- 2012 085 556
- None

## Description

### FIELD

The disclosure, in various embodiments, relates generally to a gas generator assembly comprising multiple stacks of gas generant wafers within a common housing, and to a method of operation of the gas generator assembly. The generator and method may have specific applicability for use in fire suppression applications.

### BACKGROUND

In the past, Halon halocarbons have found extensive application in connection with fire suppression. The term "Halon halocarbons" generally refers to haloalkanes, or halogenoalkanes, a group of chemical compounds consisting of alkanes with linked halogens and, in particular, to bromine-containing haloalkanes. Halon halocarbons are generally efficient in extinguishing most types of fires, are electrically non-conductive, tend to dissipate rapidly without residue formation and to be relatively safe for limited human exposure. In the past, Halon halocarbons, such as the halocarbon Halon 1301 (bromotrifluoromethane, CBrF3), have found utility as fire suppressants in or for areas or buildings typically not well suited for application of water sprinkler systems, areas such as data and computer centers, museums, libraries, surgical suites and other locations where application of water-based suppressants can result in irreparable damage to electronics, vital archival collections or the like.

Halon halocarbons, however, have been found to have a detrimental impact on the environment due to their ozone-depleting effect on the Earth's atmosphere.

US 2005/0115721 A1 discloses a fire suppression system for producing an inlet gas mixture. The mixture has a minimum amount of carbon monoxide particulates or smoke and includes a heat management system to reduce a temperature of the inert gas mixture.

### BRIEF SUMMARY

Embodiments of the disclosure comprise a gas generator assembly.

In one embodiment, a gas generator assembly is defined, according to claim 1.

### BRIEF DESCRIPTION OF THE DRAWINGS

FIG. 1 is a side sectional view of a gas generator assembly including a gas generator and a gas discharge structure in accordance with an embodiment;
FIGS. 2A and 2B are, respectively, a top elevation and a side elevation of a cage for laterally supporting stacks of gas generant wafers within the housing of the gas generator;
FIGS. 3A, 3B and 3C are, respectively, a spider for disposition within opposing ends of the housing of the gas generator for axially supporting the stacks of gas generant wafers, a ring of the spider and legs of the spider;
FIG. 4 is a top elevation of a retainer ring for disposition within the housing adjacent one end thereof for axially supporting the stacks of gas generant wafers;
FIG. 5 is a perspective view of the cage of FIGS. 2A and 2B having lowermost gas generant wafers of stacks of gas generant wafers disposed therein and resting upon a spider of FIG. 3A;
FIG. 6 is an enlarged, side sectional view of one end of a portion of the housing of the gas generator of FIG. 1 showing an exhaust port having a frangible barrier, an orifice plate and a diffuser plate secured over the gas exhaust port;
FIG. 7 is a side sectional view of another embodiment of a heat sink chamber portion of a gas discharge structure of the gas generator assembly of FIG. 1 employing an axially adjustable perforated plate to enable a volume of heat sink material disposed within the coolant chamber to be precisely varied and axially and laterally constrained; and
FIG. 8 is a perspective view of a gas generant wafer according to an embodiment of the disclosure; and
FIG. 9 is a top elevation of a portion of a circular, perforated support plate as employed in the gas discharge structure of the gas generator assembly of FIGS. 1 and 7.

### DETAILED DESCRIPTION

A gas generator, components thereof and a method of operation are described. While certain aspects of the disclosure are make specific reference to gas generators particularly suited for use in fire suppression applications, the disclosure is not limited to fire suppression applications.

As described in greater detail below, a gas generator in accordance with embodiments of the disclosure includes structure to laterally and axially support gas generant material employed within the generator from adverse effects of vibration and other forces which may otherwise cause movement and deterioration of the gas generant material prior to use, and which enhance the reliability and provide a more constant and repeatable burn rate of the gas generant material upon ignition.

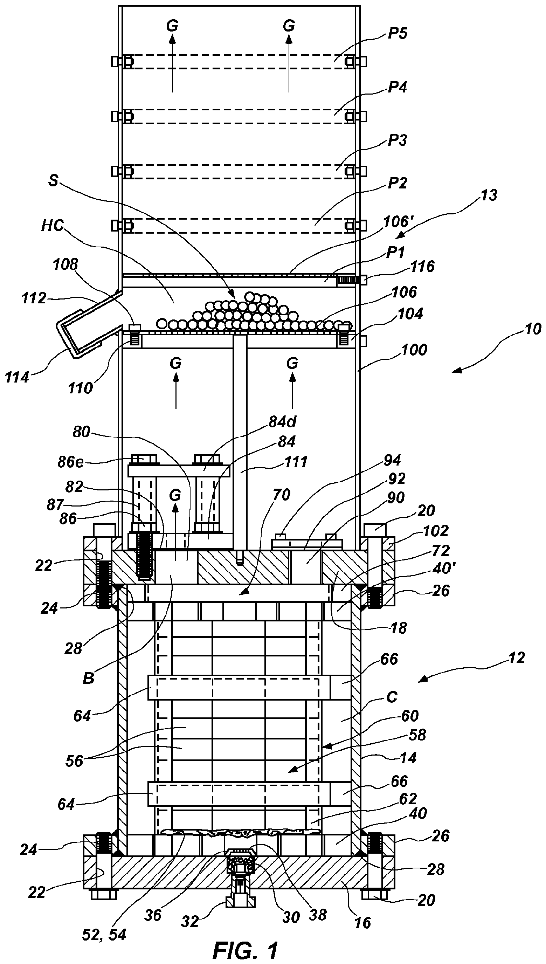

FIG. 1 depicts a gas generator assembly 10 according to an embodiment of the disclosure. Gas generator assembly 10 comprises a gas generator 12 and an associated gas discharge structure 13.

Gas generator 12 comprises a substantially cylindrical housing 14 having closed ends, one end comprising a base plate 16 and an opposing end comprising a cover plate 18 respectively secured thereto by a plurality of circumferentially spaced bolts 20 extending through holes 22 and into threaded apertures 24 in flanges 26 secured, as by welds, to housing 14. Gas-tight seals may be effected between each of base plate 16 and cover plate 18 using O-rings 28 disposed in annular grooves in surfaces of base plate 16 and cover plate 18 facing housing 14. Housing 14, base plate 16 and cover plate 18 may each comprise, for example, a metal material such as a steel material. Other materials, such as fiber-reinforced composites and reinforced ceramic materials, may also be suitable for particular applications. When assembled, such components enclose a chamber C and withstand elevated temperatures and pressures associated with operation of gas generator 12. It is contemplated that one end of the housing may be formed integrally with the substantially cylindrical portion of the housing. For commercial applications, it is contemplated that housing 14 may be permanently sealed, as by welding, crimping, use of an adhesive, etc.

Base plate 16 includes an aperture 30 which may be centrally located and into which protrudes a distal end of initiator 32 which may be of conventional design and which, as known in the art, may be electrically initiated. An outer portion of aperture 30 may be configured, for example with threads for use in securing initiator 32, while an inner portion of aperture 30 may be of enlarged diameter and hold granules, tablets or other particles of an igniter material 34. A mouth of aperture 30 may be covered with a cover 36 secured thereover and having a plurality of holes 38 therethrough.

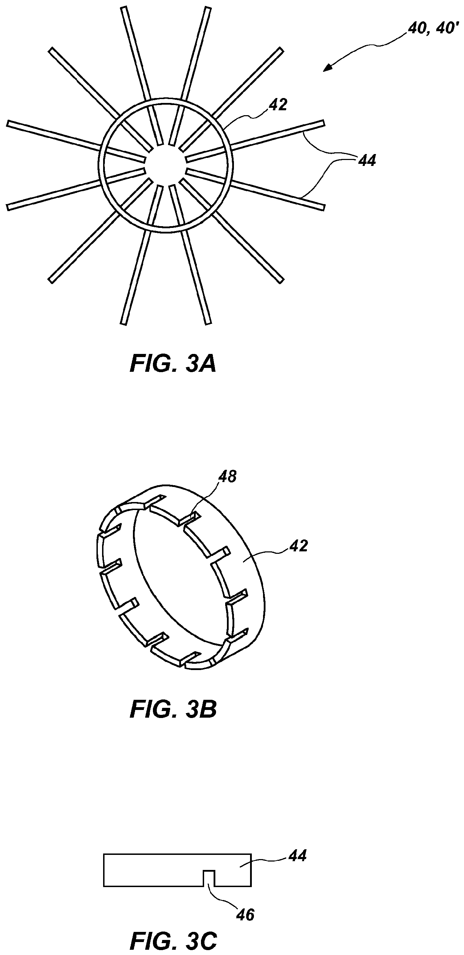

Axial support structure may be in the form of spider 40 (FIGS. 3A through 3C) is disposed adjacent base plate 16 within housing 14. The ring 42 of the spider encircles the cover 36 and provides clearance above the cover 36. The legs 44 of the spider comprise slots 46 which engage with slots 48 of ring 42 and are of a length to extend radially outward to a diameter slightly smaller than an inner diameter of housing 14 so as to centralize spider 40 within chamber C. The portions of legs 44 extending within ring 42 surround a central opening 50 into which cover 36 may protrude. The legs 44 and ring 42 may be secured together, for example by welding.

A containment structure, for example a foil pouch 52, such as of an aluminum material, containing granules, tablets or other particles of igniter material 54 and of a lateral extent greater than the diameter of cover 36, is adjacent spider 40 and extends under lowermost gas generant wafers 56 of a plurality (in this embodiment, seven) stacks 58 of gas generant wafers 50. Central opening 50 enables energy from combustion of igniter material 34 to reach and penetrate foil pouch 52 and ignite igniter material 54. However, it is contemplated that fewer or more than seven stacks 58 of gas generant wafers 56 may be employed, in consideration of the volume of gas to be generated and available space for installation of the gas generator assembly 10. For example, a smaller number of gas generant wafer stacks 58, such as four stacks, may be employed and a central gas generant wafer stack 58eliminated. Igniter material 34 may be the same as igniter material 54 and each may comprise, for example, B/KNO₃. Furthermore, igniter material 34 and igniter material 54 may be combined in a common containment structure configured to provide proximity of a portion thereof immediately adjacent initiator 32. For example, a portion of the containment structure may protrude through central opening toward, and in immediate proximity to, initiator 32.

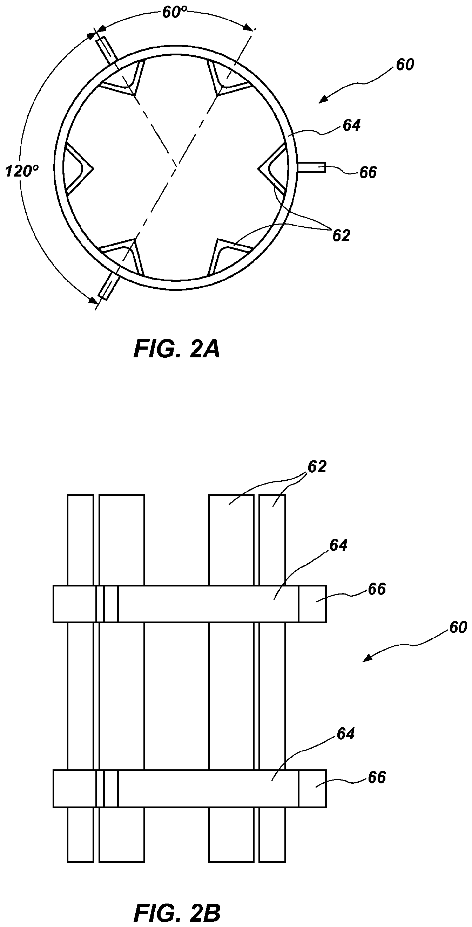

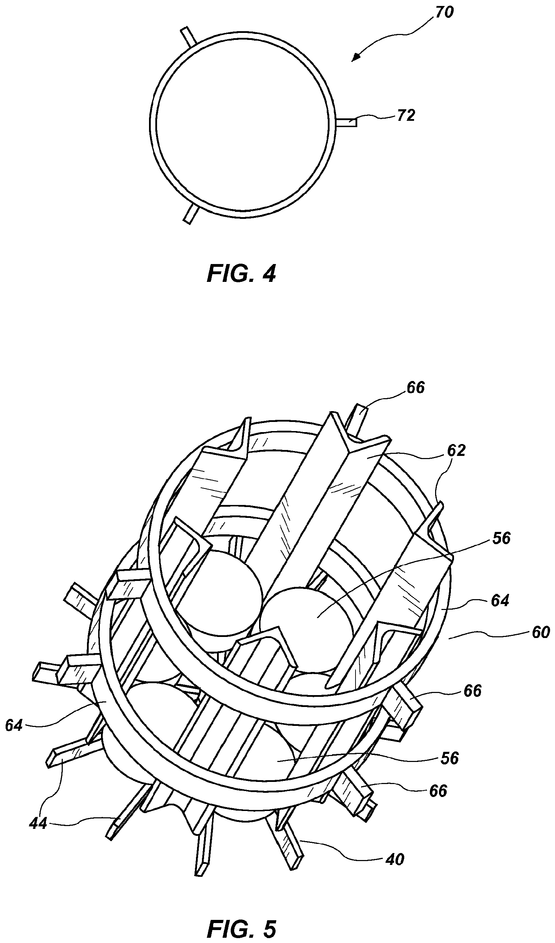

One end of each of the gas generant wafer stacks 58 is adjacent foil pouch 52, and the gas generant wafer stacks 58 are laterally supported by lateral support structure, which may be in the form of cage 60 (FIGS. 2A and 2B) which comprises axially oriented, circumferentially spaced support segments 62 of "V" cross-section. Support segments 62 may comprise angle iron segments facing outwardly and secured, as by welding, to inner surfaces of axially spaced upper and lower support rings 64. Upper and lower support rings 64 are spaced from the ends of support segments 62, the lower ends of which support segments 62 extend (FIG. 5) between legs 44 of spider 40. While support segments 62 are shown disposed at 60° intervals associated with the use of six adjacent, circumferentially arranged gas generant wafer stacks 58, those of ordinary skill in the art will understand and appreciate that the number and spacing of such support segments may be varied if more or fewer than six circumferentially spaced gas generant wafer stacks 58 are employed. Circumferentially spaced alignment tabs 66 protrude radially from the exterior surfaces of support rings 64 to a diameter slightly smaller than an inner diameter of substantially cylindrical housing 14 to centralize cage 60 within chamber C of housing 14. Cage 60 as shown in FIG. 1 has several support segments 62, omitted for clarity, of viewing gas generant wafer stacks 58, a central stack 58 shown between two outer stacks 58.

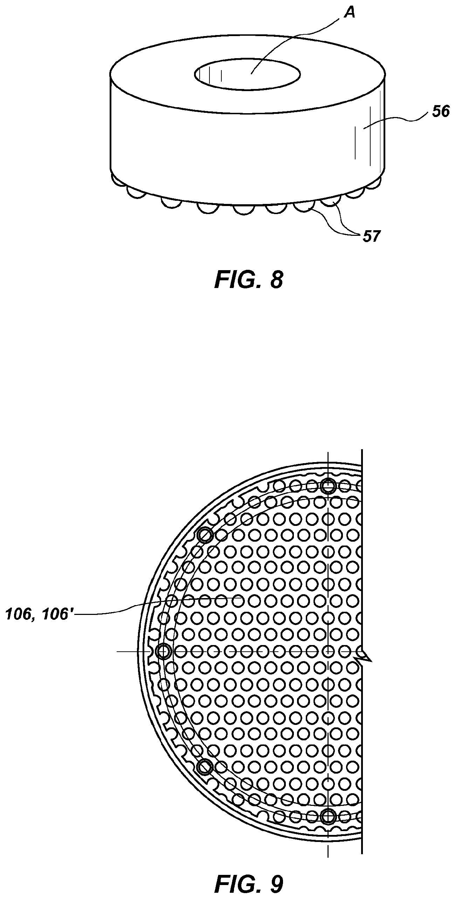

Gas generant wafer stacks 58 comprise a plurality of gas generant wafers 56, which may be of substantially cylindrical configuration and comprise a central, axially extending aperture A (FIG. 8). Gas generant wafers may also include a plurality of protrusions 57 from one major surface thereof, so as to provide a standoff between wafers assembled in a stack and facilitate combustion of all surfaces of each gas generant wafer 56.

At least some gas generant wafer stacks 58 are arranged circumferentially within cage 60 and the plurality of gas generant wafer stacks 58 may comprise a central wafer stack 58 surrounded by a plurality of, for example six, circumferentially arranged outer wafer stacks 58. Each of the circumferentially arranged gas generant wafer stacks 58 is laterally supported along at least two points of an exterior of the stack (see FIG. 5) by the lateral support structure and, more specifically in the illustrated embodiment, edges of the angle irons. The central wafer stack 58 is laterally supported by contact with the surrounding circumferential wafer stacks 58.

Axial support structure in the form of another spider 40', which may be of the same size and construction as spider 40 adjacent base plate 16, is adjacent an opposing end of each of the wafer stacks 58 from spider 40, nesting with upper portions of support segments 62 in the manner described above with respect to spider 40. Additional axial support structure, for example in the form of retainer ring 70 (FIG. 4) of smaller diameter than an inner diameter defined by segments 62 may be located adjacent spider 40' on a side thereof opposing wafer stacks 58. Retainer ring 70 may, optionally, comprise circumferentially spaced alignment tabs 72 protruding radially from an exterior surface of retainer ring 70 to centralize retainer ring 70 within chamber C, or may be centralized by use of a groove of like diameter in the interior surface of cover plate 18. Retainer rings 70 of various axial heights may be employed, the height depending upon the number of gas generant wafers 56 in wafer stacks 58 selected for a given application. However, the axial length of substantially cylindrical housing 14 may be selected based on a selected height of the wafer stacks 58 and other components having an axial height, to minimize free volume within chamber C and enhance the rate of pressure increase within chamber C upon ignition of gas generant wafers 56. In such a case, retainer ring 70 may be eliminated.

The components of spiders 40, 40', cage 60 and retainer ring 70 may be formed of a metal material, for example a steel material.

The combined use of cage 60, spiders 40 and 40' and retainer ring 70, when cover plate 18 is secured to housing 14, laterally and axially supports gas generant wafer stacks 58 against vibration and other forces which may damage the wafer stacks during handling and installation of gas generator 12, and supports gas generant wafer stacks 58 during ignition and while burning. The use of retainer rings 70 of different heights to bridge differing axial gaps between spider 40' and cover plate 18 resulting from the use of different numbers of gas generant wafers 56 employed in wafer stacks 58, may provide precise, reliable axial support regardless of stack height.

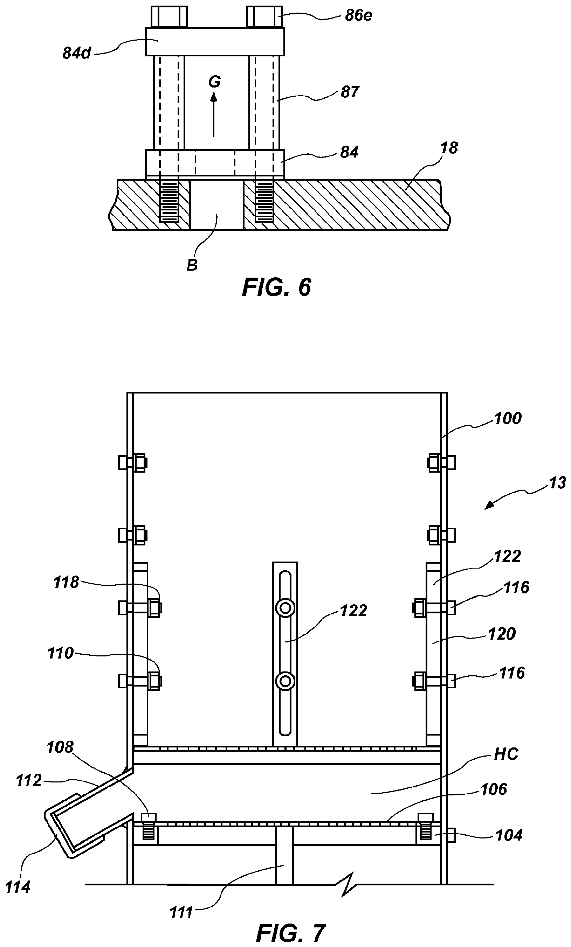

Cover plate 18 comprises at least one gas exhaust port 80 of bore diameter B therethrough, with which is associated a closure (see enlarged FIG. 6), which may take the form of a frangible barrier 82 configured as a burst disc. An orifice plate 84 having a lesser bore diameter than the diameter of bore B may, optionally located over gas exhaust port 80 and secured thereover to cover plate. Frangible barrier 82 and orifice plate 84, if used, may be secured to cover plate 18 with bolts 86. If no orifice plate is employed, an annular hold-down collar (not shown) having a bore diameter similar to that of the at least one gas exhaust port 80 may be employed to secure frangible barrier 82. The use of an orifice plate 84 enables adjustment of effective size of gas exhaust port 80 and, thus, the rate of gas expelled from chamber C to maintain an adequate pressure within chamber C to ensure a self-sustaining burn rate of gas generant wafers 56 and regulate a gas exit rate from chamber C for the desired application of gas generator 12. Cover plate 18 may also, optionally carry a diffuser plate 84d mounted above orifice place 84 using, for example, elongated bolts 86e to secure both orifice plate 84 and diffuser plate 84d to cover plate 18 and sleeves 87, through which elongated bolts 86e extend, may be used to space diffuser plate 84d above orifice plate 84. The use of diffuser plate 84d may effectively block a high-energy stream of pressurized gas G directed axially from gas exhaust port 80, prevent damage to portions of gas discharge structure 13 above the port from the gas stream and diffuse the gas stream for passage through a heat sink chamber as described below.

An appropriately selected orifice size for the volume and burn rate of gas generant material within chamber C also minimizes the potential for rupture of housing 14 of gas generator 12 due to excessive internal pressure. However, one or more overpressure release ports 90 having burst discs or other frangible barriers 92 secured thereover as by a collar 94 and bolts 96 may be incorporated into cover plate 18, into housing 14 or into base plate 16, as desired. Of course, the burst pressure of frangible barriers 92 may be selected to be greater than a burst pressure of frangible barrier 82 to ensure that the latter fails first and that gas generator operates properly unless and until an undesirable overpressure condition occurs within chamber C. Of course, more than one gas exhaust port 80 may be employed, and only a single, or greater than two, overpressure release ports 90 may be employed.

Compositions for gas generant materials suitable for use in wafers 56 are known to those of ordinary skill in the art and may differ depending upon the intended application for the generated gas. For use in fire suppression, particularly for human-occupied areas, the gas generant material of gas generant wafers 56 may be a HACN composition, as disclosed in United States Patent Nos. 5,439,537, 5,673,935, 5,725,699, and 6,039,820 to Hinshaw et al*.*

The HACN used in the gas generant material may be recrystallized and include less than approximately 0.1 % activated charcoal or carbon. By maintaining a low amount of carbon in the gas generant material, the amount of carbon-containing gases, such as CO, CO₂, or mixtures thereof, may be minimized upon combustion of the gas generant material. Alternatively, a technical grade HACN having up to approximately 1% activated charcoal or carbon may be used. It is also contemplated that conventional gas generant materials that produce gaseous combustion products that do not include carbon-containing gases or NOₓ may also be used.

The HACN composition, or other gas generant material, may include additional ingredients, such as at least one of an oxidizing agent, ignition enhancer, ballistic modifier, slag enhancing agent, cooling agent, a chemical fire suppressant, inorganic binder, or an organic binder. By way of example, the HACN composition may include at least one of cupric oxide, titanium dioxide, guanidine nitrate, strontium nitrate, and glass. Many additives used in the gas generant material may have multiple purposes. For sake of example only, an additive used as an oxidizer may provide cooling, ballistic modifying, or slag enhancing properties to the gas generant material. The oxidizing agent may be used to promote oxidation of the activated charcoal present in the HACN or of the ammonia groups coordinated to the cobalt in the HACN. The oxidizing agent may be an ammonium nitrate, an alkali metal nitrate, an alkaline earth nitrate, an ammonium perchlorate, an alkali metal perchlorate, an alkaline earth perchlorate, an ammonium peroxide, an alkali metal peroxide, or an alkaline earth peroxide. The oxidizing agent may also be a transition metal-based oxidizer, such as a copper-based oxidizer, that includes, but is not limited to, basic copper nitrate ([Cu₂(OH)₃NO₃]) ("BCN"), Cu₂O, or CuO. In addition to being oxidizers, the copper-based oxidizer may act as a coolant, a ballistic modifier, or a slag enhancing agent. Upon combustion of the gas generant 8, the copper-based oxidizer may produce copper-containing combustion products, such as copper metal and cuprous oxide, which are miscible with cobalt combustion products, such as cobalt metal and cobaltous oxide. These combustion products produce a molten slag, which fuses at or near the burning surface of the wafer 56 and prevents particulates from being formed. The copper-based oxidizer may also lower the pressure exponent of the gas generant material, decreasing the pressure dependence of the burn rate. Typically, HACN-containing gas generants material that include copper-based oxidizers ignite more readily and burn more rapidly at or near atmospheric pressure. However, due to the lower pressure dependence, they burn less rapidly at extremely high pressures, such as those greater than approximately 206.8 bar.

In the illustrated embodiment, gas discharge structure 13 extends axially from gas generator 12 and comprises a substantially cylindrical, tubular housing 100 having an annular flange 102 at an end thereof proximate gas generator 12 and secured thereto using bolts 20 extending through holes 22 in cover plate 18.

An annular support 104 is secured within tubular housing 100 above cover plate using, for example, welds or bolts. A perforated heat sink material support which may be in the form of perforated support plate 106 (FIG. 9) may be secured to support 104 using a plurality of circumferentially spaced bolts 108 which are threaded into axially extending holes 110 from the top of support 104. A support rod 111 may, optionally, be secured to cover plate 18 below perforated support plate 106 and extend to the center thereof to prevent bowing under the weight of a heat sink material above, as will be subsequently described.

Another perforated heat sink material support in the form of perforated support plate 106', which may be of the same material, size and have the same perforation size and pattern as those of perforated support plate 106, is disposed axially above support plate 106, the two perforated support plates 106, 106' and a segment of tubular housing 100 between these two components providing a heat sink chamber 108. Heat sink chamber HC contains a heat sink material of a material and in a form to absorb heat from gas G exiting from chamber C of gas generator 10 through the at least one gas exhaust port 80 and passing through gas discharge structure 13 and cool the gas G without creating an undesirably high back pressure below perforated support plate 106 as the gas passes through the heat sink material. One suitable heat sink material may be in the form of metal pellets or particles such as, for example, steel shot S (only some shown for clarity in FIG. 1, although heat sink chamber 108 is filled with steel shot S for operation) of a diameter larger than a diameter of the holes in perforated support plates 106 and 106', such an arrangement providing passages for gas between the steel shot S. Outlet tube 112 opening into heat sink chamber 108 above perforated support plate 106 may, when cap 114 is removed, be used to remove the steel shot or other heat sink material from heat sink chamber if desired. The components of gas discharge structure may be fabricated from a metal material, for example a steel material.

As shown in FIG. 1, perforated support plate 106' may be secured to tubular housing 100 by bolts 116 and may be axially adjustable in position within tubular housing 100 at a plurality of positions P1 through P5. Heat sink chamber 108 and, thus the quantity of steel shot S, may be varied as desirable to effect sufficient heat reduction in the exhausting gas, and the selected quantity of steel shot may be snugly contained within heat sink chamber between perforated support plates 106 and 106'.

FIG. 7 depicts another embodiment of a heat sink chamber portion of a gas discharge structure 13, wherein perforated support plate 106' is more finely axially adjustable within tubular housing 100. In the embodiment of FIG. 7, axially extending struts 120 having axial slots 122 therein are secured to perforated support plate 106 proximate its outer diameter, and bolts 116 extend through slots 122 to nuts 118 which may be tightened when perforated support plate 106' is axially adjusted to a desired position. For example, perforated support plate 106' may be adjusted to maintain a compact mass of steel shot S within heat sink chamber HC after steel shot S has, optionally, been vibrated within tubular housing to minimize free space between shot.

In operation, the gas generator assembly of embodiments of the present disclosure is selectively actuated by operation of initiator 32, which may be effected in response to an undesired environmental condition sensed by a sensor, as is well known in the art, or manually by a human sensing such condition. For example, temperature and smoke sensors may be employed, as may a manual switch. When initiator 32 is placed into operation, it ignites igniter material 34 and 54 via ignition of igniter material 34 which, in turn, substantially simultaneously ignites gas generant wafers 56 of wafer stacks 58. Pressure increases within gas generator 12 as the gas generant material combusts and generates gas, so that burning of gas generant wafers 56 becomes self-sustaining, and frangible barrier 82 fails at approximately a predetermined internal pressure of gas generator housing 14 greater than ambient pressure in the environment surrounding gas generator 12. Generated gas from the combusting gas generant wafers 56 is released into gas discharge structure 13 through at least one gas exhaust port 80 and flows through heat sink material comprising steel shot S and, subsequently out of gas discharge structure 13 for its intended purpose.

While the disclosure has been described with references to certain illustrated embodiments, it is not so limited. Those of ordinary skill in the art will understand and appreciate that additions and modifications to, and deletions from, the illustrated embodiments may be made without departing from the scope of the invention, which is limited only by the claims which follow herein.

## Claims

1. A gas generator assembly (10), comprising:
a gas generator (12) including:
a substantially cylindrical housing (14) comprising a gas exhaust port and containing:
a stack of substantially cylindrical gas generant wafers located within a closed chamber (C) within the housing, the chamber in communication with the gas exhaust port;
igniter material adjacent the stack of gas generant wafers adjacent one end of the housing; an initiator operably associated with the igniter material and communicable with an exterior of the housing;
the gas generator assembly **characterized by**:
a plurality of laterally adjacent and laterally and axially supported stacks (58) of substantially cylindrical gas generant wafers (58) located within the chamber (C) within the substantially cylindrical housing (14) in spaced relationship to and free from contact with structure of a side wall of the substantially cylindrical housing (14), at least some of the plurality of laterally adjacent gas generant wafer stacks (58) being:
laterally supported by lateral support structure (60) extending axially along a length of a respective stack (58) and located inwardly of the side wall of the housing (14), substantially contacting the respective stack (58) on at least a part of a circumference thereof and supporting each stack (58) against rotational movement within the substantially cylindrical housing (14); and
axially supported at opposing ends by axial support structure (40, 40') contacting gas generant wafers (56) of the respective stack (58);
the gas generant wafers (56) of the stacks (58) formulated and in combination to, upon ignition, generate a gas within the chamber (C) of a pressure in excess of ambient; and
igniter material (54) adjacent the plurality of laterally adjacent stacks (58) adjacent one end of the housing (14);
the substantially cylindrical housing (14) comprising at least one closed gas exhaust port (80, 82) in communication with the chamber (C) adjacent an opposing end of the laterally adjacent stacks (58), the at least one closed gas exhaust port (80, 82) configured to open to release the gas to an exterior of the substantially cylindrical housing (14) in response to substantially a predetermined pressure within the chamber (C) above ambient pressure.

2. The gas generator assembly of claim 1, further comprising a gas discharge structure (13) into which the at least one gas exhaust port (80) communicates when open.

3. The gas generator assembly of claim 2, wherein the gas discharge structure (13) further comprises a substantially tubular (100) housing including a heat sink chamber (HC) containing a heat sink material providing passages for gas from the at least one gas exhaust port (80) therethrough.

4. The gas generator assembly of claim 3, wherein the heat sink material comprises steel shot (S).

5. The gas generator assembly of claim 4, wherein the steel shot (S) is contained between two axially separated perforated supports (106, 106') within the substantially tubular housing (100).

6. The gas generator assembly of claim 5, wherein a position of at least one of the perforated supports (106') is axially adjustable within the tubular housing (100).

7. The gas generator assembly of claim 1, wherein the axial support structure comprises spiders (40, 40') disposed adjacent opposing ends of the plurality of laterally adjacent stacks (58), the lateral support structure comprises a cage (60) laterally surrounding the plurality of laterally adjacent stacks (58), and a retainer ring (70) adjacent one of the spiders(40') on a side thereof opposing the plurality of laterally adjacent stacks (58).

8. The gas generator assembly of claim 7, wherein
each spider (40, 40') comprises a plurality of radially extending legs (44) secured to a ring (42) intermediate ends of the legs (44), inner ends of the legs (44) surrounding a central opening and outer ends of the legs (44) defining a diameter slightly smaller than an inner diameter of the housing (14), one spider adjacent (40') one end of the housing (14);
the cage (60) comprising a plurality of axially spaced support rings (64) having a plurality of axially oriented, circumferentially spaced support segments (62) secured thereto, the support rings (64) being axially spaced from ends of the support segments (62); and
the retainer ring (70) disposed between the one of the spiders (40') and adjacent an opposing end of the housing (14).

9. The gas generator assembly of claim 1, wherein the gas generant wafers (56) are of cylindrical shape.

10. The gas generator assembly of claim 9, wherein the gas generant wafers (56) further comprise an axial, central aperture (A).

11. The gas generator assembly of claim 1, wherein the gas generant wafers (56) comprise an HACN (hexaamminecobalt(III) nitrate) composition.

12. The gas generator assembly of claim 1, wherein the plurality of laterally adjacent gas generant wafer stacks (58) comprises seven gas generant wafer stacks (58).

13. The gas generator assembly of claim 1, wherein at least some of the plurality of laterally adjacent gas generant wafer stacks (58) are arranged circumferentially within the chamber (C).

14. The gas generator assembly of claim 1, further comprising a frangible barrier (82) closing the at least one closed gas exhaust port (80), the frangible barrier (82) structured to fail and open the at least one closed gas exhaust port (80) in response to the predetermined pressure within the chamber (C) above ambient pressure.

15. The gas generator of claim 1, further comprising a changeable orifice plate (84) having a bore diameter less than a bore diameter (B) of the at least one gas exhaust port (80) secured in alignment with the at least one gas exhaust port (80).

## Patentansprüche

1. Gasgeneratoranordnung (10), umfassend:
einen Gasgenerator (12) enthaltend:
ein im Wesentlichen zylindrisches Gehäuse (14), das eine Gasauslassöffnung umfasst und aufweist:
einen Stapel von im Wesentlichen zylindrischen, gaserzeugenden Wafern, die sich in einer geschlossenen Kammer (C) innerhalb des Gehäuses befinden, wobei die Kammer mit der Gasauslassöffnung in Verbindung steht;
Zündmaterial neben dem Stapel von gaserzeugenden Wafern neben einem Ende des Gehäuses;
einen Initiator, der funktionsfähig mit dem Zündmaterial verbunden ist und mit dem Äußeren des Gehäuses in Verbindung steht;
die Gasgeneratoranordnung **gekennzeichnet durch**:
eine Vielzahl von seitlich nebeneinanderliegenden und seitlich und axial unterstützten Stapeln (58) von im Wesentlichen zylindrischen gaserzeugenden Wafern (58), die innerhalb der Kammer (C) innerhalb des im Wesentlichen zylindrischen Gehäuses (14) in beabstandeter Beziehung zu und frei von Kontakt mit der Struktur einer Seitenwand des im Wesentlichen zylindrischen Gehäuses (14) angeordnet sind, wobei zumindest einige der Vielzahl von seitlich benachbarten gaserzeugenden Waferstapeln (58) sind:
seitlich durch eine seitliche Stützstruktur (60) gestützt werden, die sich axial entlang einer Länge eines jeweiligen Stapels (58) erstreckt und innerhalb der Seitenwand des Gehäuses (14) angeordnet ist, wobei sie den jeweiligen Stapel (58) zumindest an einem Teil seines Umfangs im Wesentlichen kontaktiert und jeden Stapel (58) gegen eine Drehbewegung innerhalb des im Wesentlichen zylindrischen Gehäuses (14) stützt; und
axial an gegenüberliegenden Enden durch eine axiale Stützstruktur (40, 40') gestützt wird, die die gaserzeugenden Wafer (56) des jeweiligen Stapels (58) kontaktiert;
wobei die gaserzeugenden Wafer (56) der Stapel (58) formuliert sind um in Kombination bei Zündung ein Gas in der Kammer (C) zu erzeugen mit einem Druck, der über dem Umgebungsdruck liegt; und
Zündmaterial (54) neben der Vielzahl von seitlich benachbarten Stapeln (58) neben eines Endes des Gehäuses (14);
wobei das im Wesentlichen zylindrische Gehäuse (14) mindestens eine geschlossene Gasauslassöffnung (80, 82) in Verbindung mit der Kammer (C) neben einem gegenüberliegenden Ende der seitlich nebeneinanderliegenden Stapel (58) umfasst, wobei die mindestens eine geschlossene Gasauslassöffnung (80, 82) so konfiguriert ist, dass sie sich öffnet, um das Gas als Reaktion auf einen im Wesentlichen vorbestimmten Druck innerhalb der Kammer (C) über dem Umgebungsdruck nach außerhalb des im Wesentlichen zylindrischen Gehäuses (14) zu entlassen.

2. Gasgeneratoranordnung nach Anspruch 1, die ferner eine Gasauslassstruktur (13) umfasst, in die die mindestens eine Gasauslassöffnung (80) mündet, wenn sie geöffnet ist.

3. Gasgeneratoranordnung nach Anspruch 2, wobei die Gasauslassstruktur (13) ferner ein im Wesentlichen rohrförmiges Gehäuse (100) umfasst, das eine Wärmesenkenkammer (HC) enthält, die ein Wärmesenkenmaterial aufweist, das Durchgänge für Gas von der mindestens einen Gasauslassöffnung (80) durch diese bereitstellt.

4. Gasgeneratoranordnung nach Anspruch 3, wobei das Wärmesenkenmaterial Stahlschrot (S) umfasst.

5. Gasgeneratoranordnung nach Anspruch 4, wobei der Stahlschrot (S) zwischen zwei axial getrennten perforierten Trägern (106, 106') innerhalb des im Wesentlichen rohrförmigen Gehäuses (100) enthalten ist.

6. Gasgeneratoranordnung nach Anspruch 5, wobei eine Position von mindestens einem der perforierten Träger (106') innerhalb des rohrförmigen Gehäuses (100) axial einstellbar ist.

7. Gasgeneratoranordnung nach Anspruch 1, wobei die axiale Stützstruktur Zahnkränze (40, 40') umfasst, die neben gegenüberliegenden Enden der mehreren seitlich nebeneinanderliegenden Stapel (58) angeordnet sind, wobei die seitliche Stützstruktur einen Käfig (60) umfasst, der die mehreren seitlich nebeneinanderliegenden Stapel (58) seitlich umgibt, und einen Haltering (70) neben einem der Zahnkränze (40') auf einer Seite davon umfasst, die den mehreren seitlich nebeneinanderliegenden Stapeln (58) gegenüberliegt.

8. Gasgeneratoranordnung nach Anspruch 7, wobei
jeder Zahnkranz (40, 40') eine Vielzahl von sich radial erstreckenden Beinen (44) umfasst, die an einem Ring (42) befestigt sind, der zwischen Enden der Beine liegt, wobei die inneren Enden der Beine (44) eine zentrale Öffnung umgeben und die äußeren Enden der Beine (44) einen Durchmesser definieren, der geringfügig kleiner ist als ein Innendurchmesser des Gehäuses (14), wobei ein Zahnkranz (40') neben einem Ende des Gehäuses (14) liegt;
der Käfig (60) eine Vielzahl von axial beabstandeten Stützringen (64) umfasst, an denen eine Vielzahl von axial ausgerichteten, in Umfangsrichtung beabstandeten Stützsegmenten (62) befestigt ist, wobei die Stützringe (64) axial von den Enden der Stützsegmente (62) beabstandet sind; und
der Haltering (70), der zwischen dem einen der Zahnkränze (40') und angrenzend an ein gegenüberliegendes Ende des Gehäuses (14) angeordnet ist.

9. Gasgeneratoranordnung nach Anspruch 1, wobei die gaserzeugenden Wafer (56) eine zylindrische Form haben.

10. Gasgeneratoranordnung nach Anspruch 9, wobei die gaserzeugenden Wafer (56) ferner eine axiale, zentrale Öffnung (A) aufweisen.

11. Gasgeneratoranordnung nach Anspruch 1, wobei die gaserzeugenden Wafer (56) eine HACN-Zusammensetzung (Hexaamin-Cobalt(III)-Nitrat) umfassen.

12. Gasgeneratoranordnung nach Anspruch 1, wobei die Vielzahl von seitlich nebeneinanderliegenden Stapeln von gaserzeugenden Wafern (58) sieben Stapel von gaserzeugenden Wafern (58) umfasst.

13. Gasgeneratoranordnung nach Anspruch 1, wobei zumindest einige der Vielzahl von seitlich nebeneinanderliegenden Stapeln von gaserzeugenden Wafern (58) in Umfangsrichtung innerhalb der Kammer (C) angeordnet sind.

14. Gasgeneratoranordnung nach Anspruch 1, die ferner eine zerbrechliche Barriere (82) umfasst, die die mindestens eine geschlossene Gasauslassöffnung (80) verschließt, wobei die zerbrechliche Barriere (82) so strukturiert ist, dass sie versagt und die mindestens eine geschlossene Gasauslassöffnung (80) in Reaktion auf den vorbestimmten Druck in der Kammer (C) über dem Umgebungsdruck öffnet.

15. Gasgeneratoranordnung nach Anspruch 1, die ferner eine austauschbare Öffnungsplatte (84) mit einem Bohrungsdurchmesser aufweist, der kleiner ist als der Bohrungsdurchmesser (B) der mindestens einen Gasauslassöffnung (80), die in Ausrichtung mit der mindestens einen Gasauslassöffnung (80) befestigt ist.

## Revendications

1. Un ensemble générateur de gaz (10), comprenant :
un générateur de gaz (12) comprenant :
un boîtier sensiblement cylindrique (14) comprenant un orifice d'échappement du gaz et contenant :
un empilement de galettes génératrices de gaz sensiblement cylindriques situées à l'intérieur d'une enceinte close (C) à l'intérieur du boîtier, la chambre étant en communication avec l'orifice d'échappement du gaz ;
un matériau de mise à feu adjacent à l'empilement de galettes génératrices de gaz adjacent à une extrémité du boîtier ;
un amorceur associé de manière opérante au matériau de mise à feu et pouvant communiquer avec un extérieur du boîtier ;
l'ensemble générateur de gaz étant **caractérisé par** :
une pluralité d'empilements latéralement adjacents et supportés latéralement et axialement (58) de galettes génératrices de gaz sensiblement cylindriques (58), situés à l'intérieur de l'enceinte (C) à l'intérieur du boîtier substantiellement cylindrique (14), en relation d'espacement et libres de contact avec une structure d'une paroi latérale du boîtier sensiblement cylindrique (14), au moins certains de la pluralité d'empilements de galettes génératrices de gaz latéralement adjacents (58) étant :
supportés latéralement par une structure de support latérale (60) s'étendant axialement suivant une longueur d'un empilement respectif (58) et située vers l'intérieur de la paroi latérale du boîtier (14), venant sensiblement en contact avec l'empilement respectif (58) sur au moins une partie d'une circonférence de celui-ci et supportant chaque empilement (58) à l'encontre d'un mouvement de rotation à l'intérieur du boîtier sensiblement cylindrique (14) ; et
axialement supportés à des extrémités opposées par une structure de support axiale (40, 40') venant en contact avec les galettes génératrices de gaz (56) de l'empilement respectif ;
les galettes génératrices de gaz (56) des empilements (58) qui sont formulées pour, et en combinaison, générer à la mise à feu un gaz à l'intérieur de l'enceinte (C) à une pression excédant la pression ambiante ; et
le matériau de mise à feu (54) adjacent à la pluralité d'empilements latéralement adjacents (58) qui est adjacent à une extrémité du boîtier (14) ;
le boîtier sensiblement cylindrique (14) comprenant au moins un orifice fermé d'échappement du gaz (80, 82) en communication avec l'enceinte (C), adjacent à une extrémité opposée des empilements latéralement adjacents (58), l'au moins un orifice fermé d'échappement du gaz (80, 82) étant configuré pour s'ouvrir pour libérer le gaz vers l'extérieur du boîtier sensiblement cylindrique (14) substantiellement en réponse à une pression prédéterminée à l'intérieur de l'enceinte (C) qui est au-dessus de la pression ambiante.

2. L'ensemble générateur de gaz de la revendication 1, comprenant en outre une structure d'évacuation du gaz (13) vers laquelle communique l'au moins un orifice d'échappement du gaz (80) lorsqu'il est ouvert.

3. L'ensemble générateur de gaz de la revendication 2, dans lequel la structure d'évacuation du gaz (13) comprend en outre un boîtier sensiblement tubulaire (100) comprenant une enceinte de dissipation de chaleur (HC) contenant un matériau dissipateur de chaleur ménageant des passages pour la traversée du gaz provenant de l'au moins un orifice d'échappement du gaz (80).

4. L'ensemble générateur de gaz de la revendication 3, dans lequel le matériau dissipateur de chaleur comprend de la grenaille d'acier (S).

5. L'ensemble générateur de gaz de la revendication 4, dans lequel la grenaille d'acier (S) est contenue entre deux supports perforés séparés axialement (106, 106') à l'intérieur du boîtier sensiblement tubulaire (100).

6. L'ensemble générateur de gaz de la revendication 5, dans lequel une position d'au moins l'un des supports perforés (106, 106') est ajustable axialement à l'intérieur du boîtier tubulaire (100).

7. L'ensemble générateur de gaz de la revendication 1, dans lequel la structure de support axiale comprend des croisillons (40, 40') disposés adjacents à des extrémités opposées de la pluralité d'empilements latéralement adjacents (58), la structure de support latérale comprenant une cage (60) entourant latéralement la pluralité d'empilements latéralement adjacents (58), et une bague de retenue (70) adjacente à l'un des croisillons (40') d'un côté de celui-ci à l'opposé de la pluralité d'empilements latéralement adjacents (58).

8. L'ensemble générateur de gaz de la revendication 7, dans lequel
chaque croisillon (40, 40') comprend une pluralité de branches s'étendant radialement (44) fixées à une bague (42) à des extrémités intermédiaires des branches (44), les extrémités internes des branches (44) entourant une ouverture centrale et les extrémités externes des branches (44) définissant un diamètre légèrement inférieur à un diamètre interne du boîtier (14), un croisillon (40') étant adjacent à une extrémité du boîtier (14) ;
la cage (60) comprenant une pluralité de bagues de support axialement espacées (64) possédant une pluralité de segments de support axialement orientés et espacés circonférentiellement (62) qui lui sont fixés, les bagues de support (64) étant axialement espacées des extrémités des segments de support (62) ; et
la bague de retenue (70) est disposée entre ledit un des croisillons (40') et est adjacente à une extrémité opposée du boîtier (14).

9. L'ensemble générateur de gaz de la revendication 1, dans lequel les galettes génératrices de gaz (56) sont de forme cylindrique.

10. L'ensemble générateur de gaz de la revendication 9, dans lequel les galettes génératrices de gaz (56) comprennent en outre une ouverture centrale axiale (A).

11. L'ensemble générateur de gaz de la revendication 1, dans lequel les galettes génératrices de gaz (56) comprennent une composition de HACN (nitrate d'hexaaminecobalt(III)) .

12. L'ensemble générateur de gaz de la revendication 1, dans lequel la pluralité d'empilements de galettes génératrices de gaz latéralement adjacents (58) comprend sept empilements de galettes génératrices de gaz (58).

13. L'ensemble générateur de gaz de la revendication 1, dans lequel au moins certains de la pluralité d'empilements de galettes génératrices de gaz latéralement adjacents (58) sont agencés circonférentiellement à l'intérieur de l'enceinte (C).

14. L'ensemble générateur de gaz de la revendication 1, comprenant en outre une barrière fracturable (82) fermant l'au moins un orifice fermé d'échappement du gaz (80), la barrière fracturable (82) étant structurée pour céder et ouvrir l'au moins un orifice fermé d'échappement du gaz (80) en réponse à la pression prédéterminée à l'intérieur de la chambre (C) qui est au-dessus de la pression ambiante.

15. Le générateur de gaz de la revendication 1, comprenant en outre une plaque interchangeable d'orifice (84) ayant un diamètre d'alésage inférieur à un diamètre d'alésage (B) de l'au moins un orifice d'échappement du gaz (80), fixée en alignement avec l'au moins un orifice d'échappement du gaz (80).
